# EUROPÄISCHE PATENTSCHRIFT

(11) **EP 2 079 616 B1**
(45) Veröffentlichungstag und Bekanntmachung des Hinweises auf die Patenterteilung: **13.10.2010**
(21) Anmeldenummer: 07788122.5
(22) Anmeldetag: 01.08.2007
(51) Int. Cl.: B60S 1/38

(54) **WISCHLEISTE UND WISCHBLATT MIT EINER SOLCHEN WISCHLEISTE**
WIPING STRIP AND WIPER BLADE WITH SUCH A WIPING STRIP
RÉGLETTE D'ESSUIE-GLACE ET BALAI D'ESSUIE-GLACE POURVU D'UNE TELLE RÉGLETTE

(30) Priorität: 28.09.2006 DE 102006046357
(43) Veröffentlichungstag der Anmeldung: 22.07.2009
(73) Patentinhaber: Robert Bosch GmbH, 70442 Stuttgart (DE)
(72) Erfinder: VERELST, Hubert, B-3300 Tienen (BE); WYNEN, Paul, B-3910 Neerpelt (BE); LAY, Reiner, 52072 Achen (DE); WOLFGARTEN, Sven, B-3080 Tervuren (BE)
(86) Internationale Anmeldenummer: PCT/EP2007/057952
(87) Internationale Veröffentlichungsnummer: WO 2008/037532

(56) Entgegenhaltungen:
- WO-A-2006/040259
- WO-A-2006/106109
- WO-A-2007/054158
- DE-A1-102005 009 205
- DE-U1- 9 104 461
- DE-U1-202004 020 356
- JP-A- 5 097 014

## Beschreibung

### Stand der Technik

Die Erfindung betrifft eine Wischleiste und ein Wischblatt nach der Gattung der unabhängigen Ansprüche. DE 10 2005 009 205 beschreibt ein solches Wischblatt.

Bei solchen Wischleisten beziehungsweise Wischblättern mit einem federbandartigen Tragelement soll dieses über das gesamte vom Wischblatt bestrichene Wischfeld eine möglichst gleichmäßige Verteilung des vom Wischerarm ausgehenden Wischblatts-Anpressdrucks an der Scheibe gewährleisten. Durch eine entsprechende vorgebende Krümmung des unbelasteten Tragelements - also wenn das Wischblatt nur mit seinen beiden Enden an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung, weil während des Wischbetriebs die Wischleiste, bzw. deren an der Scheibe anliegende Wischlippe, stets mit einer bestimmten Kraft gegen die Scheibe drücken muss. Das Tragelement ersetzt somit die aufwendige Tragbügelkonstruktion mit zwei in der Wischleiste angeordneten Federschienen, wie sie bei herkömmlichen Wischblättern praktiziert wird (DE-OS 15 05 397), weil das Tragelement neben der Verteilung des Anpressdrucks auch die notwendige Querversteifung der gummielastischen Wischleiste bewirkt. Bei dem bekannten Wischblatt wird nämlich die von einem Wischerarm auf einen Hauptbügel ausgeübte, zur Scheibe gerichtete Auflagekraft auf zwei Krallenbügel übertragen und von diesen über vier Krallen auf die gummielastische Wischleiste verteilt.

Bei Wischblättern mit federelastischen Tragelementen weist das Tragelement eine Federelastizität in Richtung zur Fahrzeugscheiben und eine gewisse Biegesteifheit in Richtung der Wischbewegung auf. In Arbeitsstellung wird das Wischblatt in Richtung zur Fahrzeugscheibe hin durch die Anlagekraft des Wischerarms belastet, wobei die die Wischlippe an der Fahrzeugscheibe anliegt.

Beim Wischen wirkt eine durch die Schwenkbewegung erzeugte Kraft seitlich auf das Gummiprofil. Während der Wischleistenrücken durch die Seitenkraft bewegt wird, bleibt die Wischlippe zunächst in ihrer Stellung. Dabei wirkt der dünne Steg zwischen dem Wischleistenrücken und dem Umlegkeil wegen seiner hohen elastischen Verformbarkeit als Kippgelenk, so dass die Wischlippe am Umlegkeil etwa einen Anstellwinkel von 55 Grad zur Glasoberfläche einnimmt. Diese Schlepplage ist die Arbeitsstellung der Wischlippe. Der Umlegkeil ist in dieser Lage soweit umgekippt, bis er mit seiner äußeren oberen Schulter an der Unterseite des Wischleistenrückens anliegt. Infolge der oszillierenden Wischbewegung der Scheibenwischer ergeben sich Umkehrpunkte in den Endlagen der Bewegung. Hier klappt der Umlegkeil in die entgegengesetzte Richtung um und nimmt anschließend wieder eine geschleppte Arbeitslage ein. Durch diesen Umklappvorgang entsteht insbesondere bei Wischblättern mit einem federelastischen Tragelement ein störendes Umklappgeräusch. Zudem wird der Wischgummi im Bereich des Kippstegs sehr stark elastischen verformt. Dies führt im Verlaufe der Einsatzzeit zu einer permanenten Verformungen des Wischgummiprofils, welches zuerst nur die Wischwirkung des Scheibenwischers beeinträchtigt, später aber sogar das Umklappen verhindern kann.

Aus der DE 9104461.8 U1 ist eine Wischleiste bekannt, bei der zwischen dem Wischleistenrücken und der anschlagenden Schulter des Umlegkeils eine Dämpfungsleiste vorgesehenen ist. Wenn der Umlegkeil der Wischleiste im Umkehrpunkt umklappt, schlägt die Schulter zunächst gegen die Dämpfungsleiste und drückt diese bis zur Anlage an den Wischleistenrücken. Dadurch wird die Aufschlaggeschwindigkeit gebremst und das Geräusch beim Umklappen gedämpft. Bei Wischblättern mit federelastischen Tragelementen reicht diese Dämpfung jedoch nicht immer aus. Insbesondere bei sehr langen Wischblättern wirkt das Umklappgeräusch störend.

### Offenbarung der Erfindung

Die Wischleiste mit den Merkmalen des Hauptanspruches hat den Vorteil, dass die wellenförmige Geräuschdämpfungsleiste durch die Profilierung an Effizienz gewinnt, weil der Umklappvorgang je nach Profilierung in einzelne Geräusche erzeugende Teilvorgänge unterteilt wird, wobei die einzelnen Geräusche für sich leiser sind und zeitlich gestaffelt erzeugt werden, so dass ein einzelner Schlag vermieden ist.

Durch die in den Unteransprüchen aufgeführten Merkmale sind vorteilhafte Weiterbildungen des Wischblatts nach dem Hauptanspruch möglich.

Wird die Profilierung durch seitliche Stege geschaffen, wird der Umlegvorgang eher kontinuierlich gedämpft, weil die Stege auf den Umlegkeil mit steigender Schräglage eine erhöhte Druckkraft auf der einen Seite bzw. eine erhöhte Zugkraft auf der anderen Seite ausüben. Damit wird zum einen, wie gewünscht, verhindert, dass die Schulter des Umlegkeils mit voller Geschwindigkeit gegen die Schulter des Wischleistenrückens beziehungsweise der Geräuschdämpfungsleiste prallt, womit das störende Umklappgeräusch effektiv verhindert werden kann, zum anderen bewirkt die ständige Kraft auf den sich in der Schlepplage befindenden Umlegkeil, dass das Umlegen als solches am Wendepunkt sicher stattfindet. Insbesondere bei Wischblättern, die bereits längere Zeit Umwelteinflüssen ausgesetzt waren, kann es hier bisweilen zu Problemen kommen.

Ferner hat es sich gezeigt, dass die partielle Unterbrechung der sich links und rechts neben dem Kippsteg befindenden Nuten durch die Stege die Wintertauglichkeit des Wischblatts verbessern, weil Eis und Schnee effektiver durch die Bewegung des Wischblatts aus den Nuten herausgearbeitet werden können.

Die Herstellbarkeit der Wischleiste wird verbessert, wenn die Stege senkrecht zum Kippsteg angeordnet sind.

Durch die Anordnung der Stege auf beiden Seiten des Kippstegs wird gewährleistet, dass sowohl in der Aufwärts- als auch der Abwärtsbewegung die vorgesehene Schlepplage erreicht und Wischqualität gleichermaßen gut wird. Werden die Stege auf den beiden Seiten versetzt angeordnet, verteilen sich die Kräfte entlang des Kippstegs gleichmäßig. Ferner werden möglichen, durch ungünstige Windverhältnisse entstehenden Resonanzen, entgegengewirkt. Es hat sich dabei ein Abstand der Stege voneinander zwischen 10 mm und 50 mm als optimal herausgestellt.

Eine konkave Profilierung der Stege vermindert die Kerbwirkung und damit die Gefahr des Reißens an den Verbindungsstellen zwischen den Stegen, der Geräuschdämpfungsleiste und den gegenüberliegenden Seiten, während eine konvexe Ausbildung der Stege bis hin zur Zylinderform die Beweglichkeit erhöht.

Zwischen den Stegen oder über die gesamte Wischleiste kann die Geräuschdämpfungsleiste bogenförmig ausgebildet sein, was bewirkt, dass beim Umklappen eine Berührung der gegenüberliegenden Kanten an einem oder an wenigen einzelnen Punkten stattfindet und von dort aus ein kontinuierliches Anlegen erfolgt. Durch eine Wellenform wird ein ähnlicher Effekt erzielt. Durch Bogen- oder Wellenform sowie die Dicke usw. kann dem Aufbau im Prinzip eine Federkonstante eingeprägt werden.

Die Anpassungsmöglichkeiten an unterschiedliche Anforderungen wie Wischblattlänge oder -material werden erhöht, wenn mehrere Geräuschdampfungsleisten eingesetzt werden. Diese können auch unterschiedlich profiliert und/oder mit ihrer Profilierung gegeneinander versetzt sein.

Die Profilierung kann auch derart erfolgen, dass die Geräuschdämpfungsleiste Verdickungen aufweist, die auch über die Länge der Wischleiste variieren können. Ebenso kann die Geräuschdämpfungsleiste schräg und/oder geteilt ausgebildet sein und über die Wischleistenlänge variieren. Auch die Ausbildung aus einem anderen Material ist möglich. Über diese Maßnahmen kann das Anlegeverhalten beeinflusst und darüber die Geräuschentwicklung herabgesetzt werden.

### Zeichnung

In der Zeichnung zeigen
Figur 1 ein erfindungsgemäßes Wischblatt in perspektivischer Darstellung mit strichpunktiert angedeutetem Wischerarm,
Figur 2 eine gegenüber Fig. 1 vergrößert dargestellte erfindungsgemäße Wischleiste mit angedeutetem Tragelement,
Figur 3 einen Schnitt entlang der Linie III-III in Figur 2,
Figur 4 eine Variante nach Figur 3,
Figur 5 eine Ansicht entlang des Pfeils V in Figur 2,
Figur 6 eine Variante der Einzelheit VI in Figur 5,
Figuren 7 und 8 Varianten zu Figur 6,
Figur 9 weitere Varianten zu Figur 1,
Figuren 10 bis 13 Wischleistenvarianten in Seitenansicht und
Figuren 14 bis 17 Wischleistenvarianten auszugsweise im Schnitt.

### Beschreibung der Ausführungsbeispiele

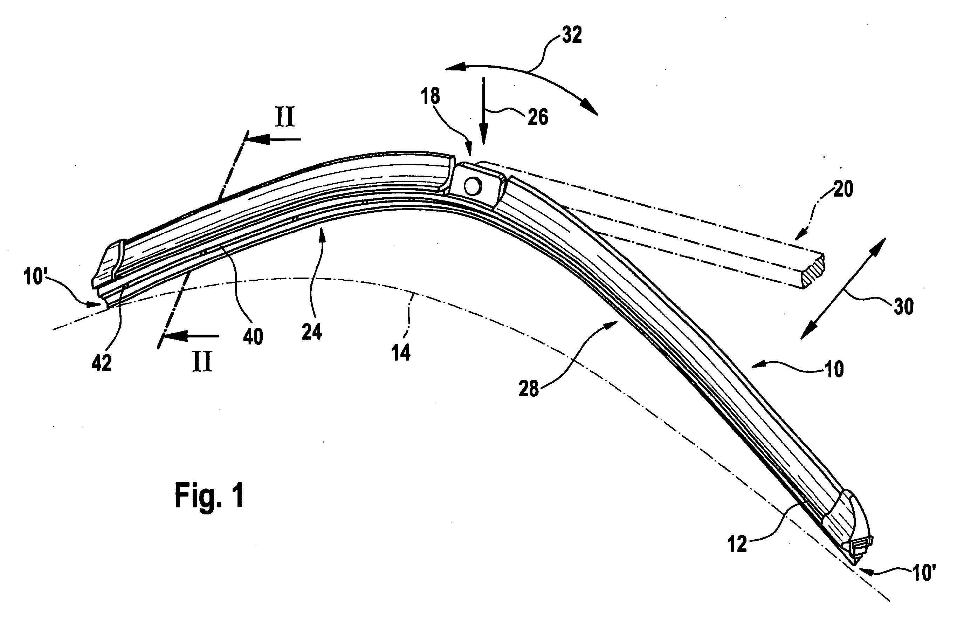

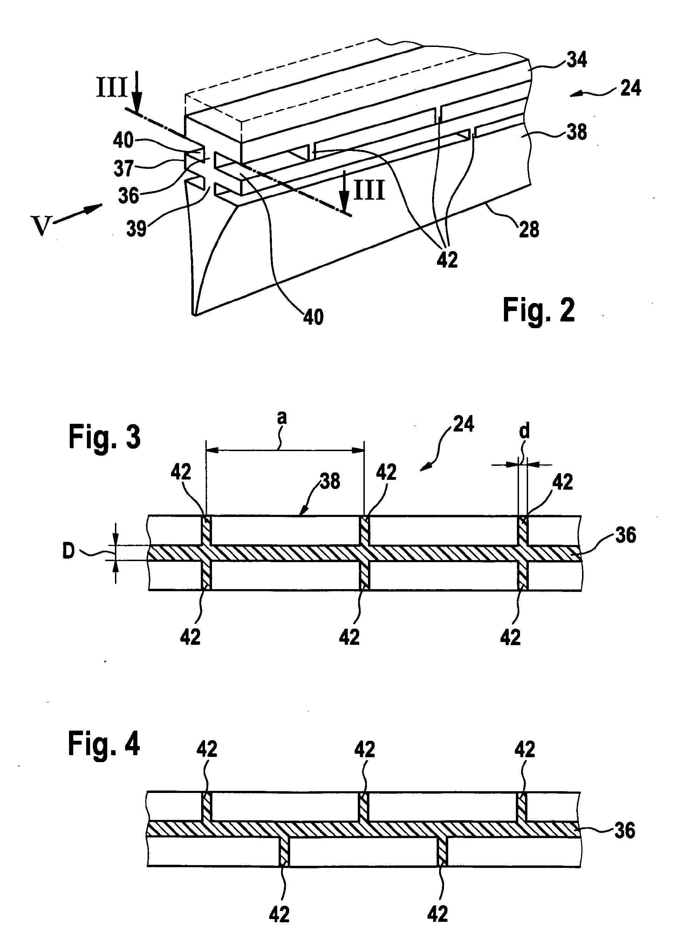

Ein in Fig. 1 dargestelltes Wischblatt 10 weist ein bandartig lang gestrecktes, federelastisches, ein- oder mehrteiliges Tragelement 12 auf, welches in unbelastetem Zustand in Längsrichtung gekrümmt ist. An der von der zu wischenden Scheibe 14 abgewandten konvexen oberen bzw. äußeren Bandseite 16 (Figuren 1 und 2) des Tragelements ist in dessen Mittelabschnitt eine beispielsweise flächig an dieser anliegenden Anschlussvorrichtung 18 angeordnet, mit deren Hilfe das Wischblatt 10 mit einem an der Karosserie eines Kraftfahrzeugs geführten, angetriebenen Wischerarm 20 lösbar verbunden werden kann. An der der Scheibe zugewandten konkaven unteren bzw. inneren Bandfläche oder Bandseite 22 des gekrümmten Tragelements 12 ist eine lang gestreckte, gummielastische Wischleiste 24 angeordnet, die sich längsachsparallel zum Tragelement 12 erstreckt. An dem freien Ende des Wischerarms sind nicht näher dargestellte Gegenanschlussmittel vorgesehen, welche mit der Anschlussvorrichtung 18 des Wischblatts im Sinne eines Gelenks zusammenwirken.

Der Wischerarm 20 und damit auch das Wischblatt 10 sind in Richtung des Pfeils 26 zur zu wischenden Scheibe belastet, deren zu wischende Oberfläche in Fig. 1 durch die strichpunktierte Linie 14 angedeutet ist. Da die strichpunktierte Linie die stärkste Krümmung der Scheibenoberfläche darstellen soll, ist klar ersichtlich, dass die Krümmung des mit seinen Enden 10' an der Scheibe 14 anliegenden, noch unbelasteten Wischblatts 10 stärker ist als die maximale Scheibenkrümmung. Es hat - unbelastet - also gegenüber der Scheibe einen konkaven Verlauf. Unter dem Anpressdruck (Pfeil 26) legt sich das Wischblatt 10 mit seiner die Wischarbeit verrichtende Wischlippe 28 über seine gesamte Länge an der Scheibenoberfläche 14 an und geht in eine der Strecklage angenäherte Arbeitslage über. Dabei baut sich im bandartigen, federelastischen Tragelement 12 eine Spannung auf, welche für eine ordnungsgemäße Anlage der Wischleiste 24 bzw. deren Wischlippe 28 über deren gesamte Länge an der Kraftfahrzeugscheibe 14 sorgt. Weil die in aller Regel sphärisch gekrümmte Scheibe nicht einen Abschnitt einer Kugeloberfläche darstellt, muss sich das Wischblatt 10 gegenüber dem Wischerarm 20 während seiner Wischbewegung (Doppelpfeil 30) ständig der jeweiligen Lage und dem Verlauf der Scheibenoberfläche 14 anpassen können. Deshalb ist die eine Schwingbewegung (Doppelpfeil 32) um die Gelenkachse der Anschlussverbindung ermöglichende gelenkige Verbindung zwischen Wischerarm 20 und Wischblatt 10 notwendig.

Die in Figur 2 dargestellte Wischleiste 24 weist einen Wischleistenrücken 34 auf, der über einen ersten Kippsteg 36 mit einem einer Geräuschdämpfungsleiste 37 und über einen zweiten Kippsteg 39 mit einem Umlegkeil 38 verbunden ist, an dessen Unterseite die Wischlippe 28 angeordnet ist. Seitlich des Kippstegs 36 erstrecken sich zwei Längsnuten 40, deren Oberseite vom Wischleistenrücken 34 und deren Unterseite vom Umlegkeil 38 gebildet sind. Innerhalb der Längsnuten 40 sind, verteilt über die Länge der Längsnuten 40, Stege 42 vorgesehenen, die seitlich vom Kippsteg 36 angeordnet sind. Der erste Kippsteg 36 kann gegenüber dem zweiten Kippsteg 39 eine andere Dicke aufweisen, auch wenn die beiden Kippstege im Folgenden gleich breit dargestellt sind.

Jeder Steg 42 erstreckt sich vom Kippsteg 36 ausgehend seitlich in Richtung zur offenen Seite der Längsnut 40 und verbindet den Wischleistenrücken 34 mit dem Umlegkeil 38. Die Stege 42 sind Teil der Wischleiste 24 und deshalb stoffschlüssig mit dem Wischleistenrücken 34, dem Kippsteg 36 sowie dem Umlegkeil 38 verbunden. Denkbar wäre jedoch auch, die Stege 42 separat auszubilden und in die Längsnuten 40 einzubringen.

In Figur 3 ist zu erkennen, dass sich jeder Steg 42 vom Kippsteg 36 ausgehend senkrecht zum Kippsteg 36 erstreckt. Ferner ist erkennbar, dass die Stege 42 beidseitig zum Kippsteg 36 angeordnet sind. Sind die Stege 42 der Figur 3 zu beiden Seiten des Kippstegs 36 fluchtend angeordnet, so zeigt Figur 4 die Stege 42 der beiden Seiten jeweils versetzt angeordnet.

Der Abstand a der Stege 42 zueinander soll zwischen 10 mm und 50 mm betragen und liegt vorzugsweise bei 20 mm. Im Falle der versetzt angeordneten Stege 42 nach Figur 4 ergibt sich dann ein Abstand von jeweils 10 mm, wenn man die Stege 42 zu beiden Seiten des Kippstegs 36 betrachtet. Über die Länge der Wischleiste 24 sind die Stege 42 gleichmäßig verteilt. Es ist jedoch auch denkbar, z. B. aus Resonanzgründen, den Abstand a über die Länge der Wischleiste 24 zu variieren.

Der Kippsteg 36 stellt die eigentliche Wirkverbindung zwischen dem Wischleistenrücken 34 und dem Umlegkeil 38 dar und muss dementsprechend dimensionierten werden. Die Stege 42 sind in ihrer Dicke d kleiner gehalten, als die Dicke D des Kippstegs 36. In einer bevorzugten Ausführungsform beträgt die Dicke d der Stege 42 die Hälfte der Dicke D des Kippstegs 36.

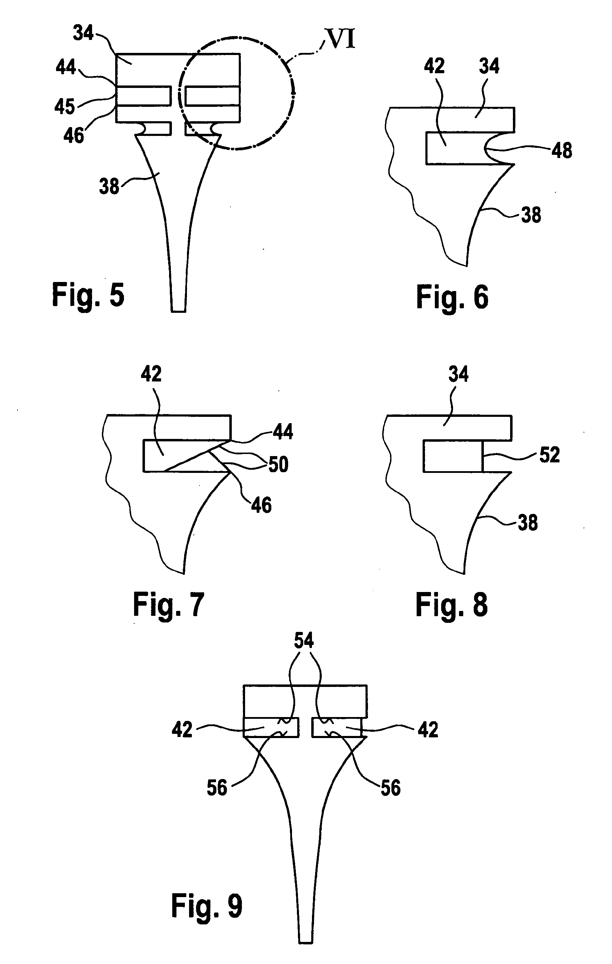

Wie erwähnt, stellen die Stege 42 eine Verbindung zwischen dem Wischleistenrücken 34 und dem Umlegkeil 38 dar und erstrecken sich ausgehend vom Kippsteg 36 zu jeweils einer offenen Seite der Längsnuten 40. Dabei ist klar, dass es aus Fertigungsgründen sinnvoll ist, die Stege 42 mit dem Kippsteg 36 zu verbinden. Denkbar wäre jedoch auch, zwischen den Stegen 42 und dem Kippsteg 36 eine Lücke zu belassen. Ähnlich verhält es sich mit den offenen Seiten der Längsnuten 40. Die Stege 42 verbinden eine Außenkante 44 des Wischleistenrücken 34 in einer geraden Linie 45 mit einer Außenkante 46 des Umlegkeils 38, wie das in Figur 5 dargestellt ist.

In den Figuren 6 bis 8 sind hierzu Varianten dargestellt. In Figur 6 ist die Verbindung der beiden Außenkanten 44 und 46 in der Form einer Hohlkehle 48 ausgebildet, was den Vorteil einer geringen Kerbwirkung hat. Das in Figur 7 gezeigte Beispiel ist eins von drei Varianten. Die Außenseiten 50 der Stege 42 verlaufen schräg und sind nur mit einer der Außenkanten 44 oder 46 verbunden. Es besteht dabei die Möglichkeit, alle Stege 42 von der Außenkante 44 oder von der Außenkante 46 ausgehend schräg in die Längsnut 40 hinein verlaufend auszugestalten oder aber jeweils im Wechsel von der Außenkante 44 bzw. der Außenkante 46. In der weiteren Variante nach Figur 8 ist die Außenseiten 52 jeden Steges 42 in die jeweilige Längsnut 40 hinein versetzt. Sie berühren folglich keine der Außenkanten 44 oder 46.

Das Ziel, das Umklappgeräusch des Wischblatts 10 zu verringern oder gar zu eliminieren wird mit jeder der Varianten nach den Figuren 5 bis 8 erreicht. Durch die entsprechende Ausbildung der Außenseiten der Stege 42 ist es möglich, auf unterschiedliche Anforderungen zu reagieren. Wesentlich ist, dass die den Stegen 42 zuzuordnende Federkennlinie stark durch die Form der Außenseiten beeinflusst werden kann. Sie kann beispielsweise steiler oder flacher ausgebildet werden oder einen degressiven bzw. progressiven Verlauf aufweisen. Es ist auch denkbar, unterschiedliche Formen der Außenseiten der Stege 42 miteinander zu kombinieren. Dies kann bei aufeinander folgenden Stegen 42 erfolgen oder auch innerhalb eines Steges 42 an dessen Außenkante.

In Figur 9 ist dargestellt, dass die Stege 42 jeweils nur an einer Seite 54 beziehungsweise 56 angeformt sind, an der gegenüberliegenden Seite 56 bzw. 54 jedoch nur anliegen oder gar einen kleinen Abstand aufweisen. Die Ausbildung kann auch so getroffen sein, dass aufeinander folgende Stege 42 alternierend an ihrer oberen Seite 54 und an ihrer unteren Seite 56 angeformt und an der gegenüberliegenden Seite jeweils frei sind. Auf diese Weise ist es möglich, dass zwar durch die Stege 42 ausgehend vom Wischleistenrücken 34 eine Druckkraft auf den Umlegkeil 38 ausgeübt wird, eine Zugkraft aber unterbleibt.

Es ist klar, dass bei Wischblättern 10 mit mehreren übereinander angeordneten des Kippstegen 36 jedem der Kippstege 36 entsprechende Stege 42 zugeordnet werden können. Auch bei diesen höher bauenden Wischblättern ist es damit möglich, positiven Einfluss auf das Umklappgeräusch zu nehmen.

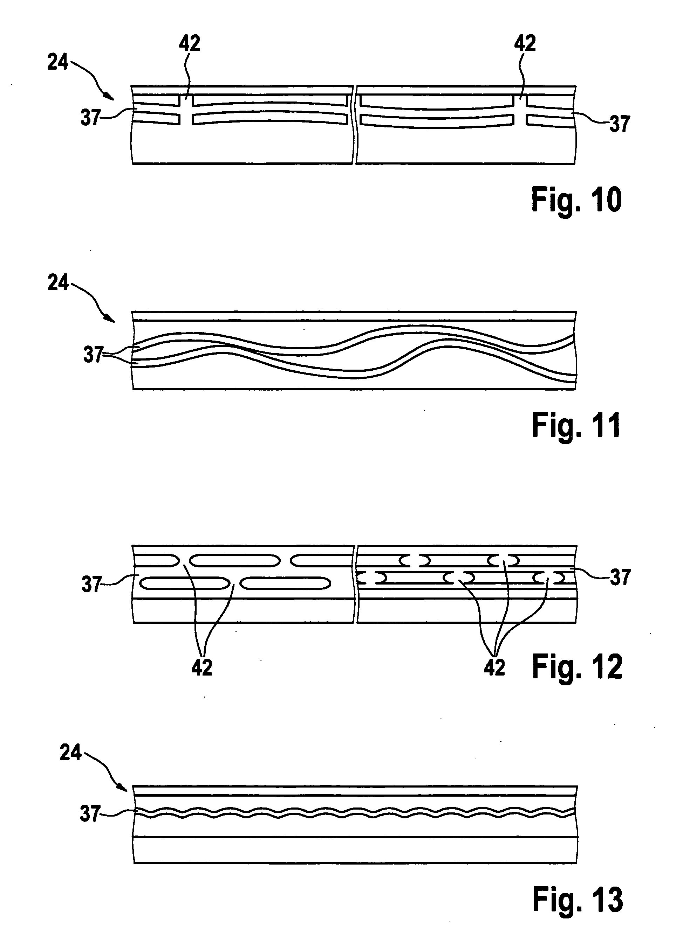

In der Figur 10 ist eine Wischleiste 24 eines Wischblatts 10 dargestellt mit einer Geräuschdämpfungsleiste 37, die sich in der linken Ansicht bogenförmig nach oben und in der rechten Ansicht bogenförmig nach unten wölbt. Durch die Bogenform ist erreicht, dass der Abstand zu den benachbarten Kanten bzw. Flächen kontinuierlich zu- bzw. abnimmt. Der Anlegvorgang während des Umklappens erfolgt damit ausgehend von einem ersten Anlegen kontinuierlich.

Die Geräuschdämpfungsleiste 37 ist von Stegen 42 gehalten, zwischen denen die Bogen aufgespannt sind.

Die in der Figur 11 gezeigte Wischleiste 24 weist zwei Geräuschdämpfungsleisten 37 auf. In diesem Fall sind die beiden Geräuschdämpfungsleisten 37 wellenförmig ausgestaltet, wobei die Wellenlagen gegeneinander versetzt sind. Die Geräuschdämpfungsleiste 37 der Figur 13 ist ebenfalls wellenförmig, jedoch mit einer erheblich kleineren Wellenlänge.

In Figur 12 zeigt die linke Ansicht konkave Stege 42, deren konkave Flächen in Längsrichtung der Wischleiste 24 weisen. Dadurch entstehen leicht oval wirkende Aussparungen zwischen den Stegen. Diese Form erhöht die Reißfestigkeit der Stege 42 und ist damit insbesondere am Anfang und am Ende der Wischleiste ausgeführt. Die rechte Ansicht zeigt konvexe Flächen, wodurch eher zylinderförmige Stege entstehen, deren Beweglichkeit in Längsrichtung relativ zum Wischleistenrücken 34 und zum Umlegkeil 38 erhöht ist.

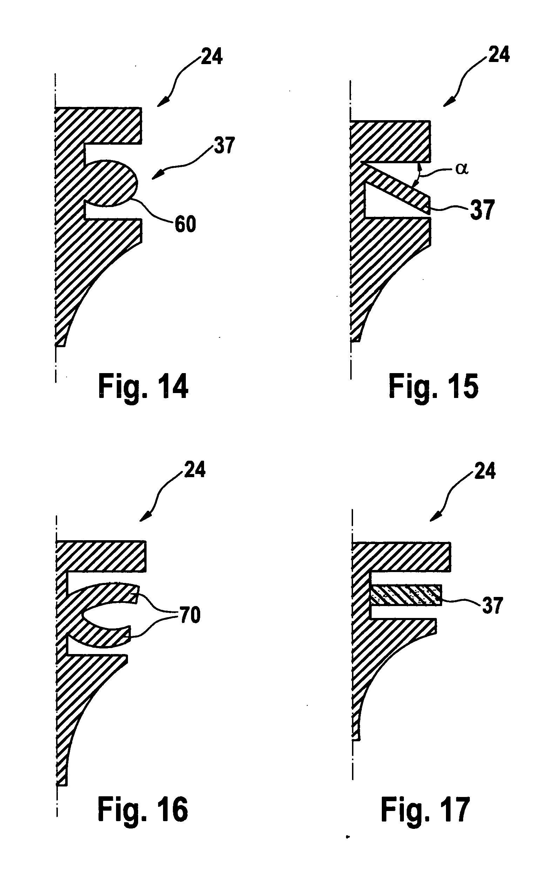

Die im Querschnitt halbseitig dargestellten Wischleisten 24 der Figuren 14 bis 17 zeigen jeweils unterschiedliche Geräuschdämpfungsleisten 37. Eine in Figur 14 ausgeformte Verdickung 60 verringert den Abstand zu den benachbarten Wänden der Geräuschdämpfungsleisten 37. Die Verdickung 60 kann über die Wischleistenlänge variieren.

In Figur 15 ist erkennbar, dass die Geräuschdämpfungsleiste 37 mit dem Wischleistenrücken 34 einen Winkel Alpha einschließt, der kleiner als 90 Grad ist. Die Geräuschdämpfungsleiste 37 weist zwar noch einen kleinen Abstand zum Umlegkeil 38 auf, der aber so klein ist, dass ein Anleggeräusch nicht oder kaum zu vernehmen ist. Ab dann ist der Umlegvorgang mechanisch gedämpft. Selbstverständlich kann die Geräuschdämpfungsleiste 37 auch mit dem Umlegkeil 38 einen entsprechenden Winkel einschließen und selbstverständlich können diese Winkel über die Wischleistenlänge variieren.

In einer weiteren Variante nach Figur 16 ist die Geräuschdämpfungsleiste 37 geteilt ausgebildet und weist einzelne Schenkel 70 auf, die von einer gemeinsamen Basis aus divergieren. Der äußere Abstand der Schenkel 70 kann über die Länge der Wischleiste variieren.

Eine Geräuschdämpfungsleiste 37 aus einem anderen Material ist in der Figur 17 dargestellt. Das Material ist weicher als das des Umlegkeils, so dass - wenn dieser beim Umklappen auf die Geräuschdämpfungsleiste 37 prallt - ein Anlegegeräusch abhängig von der Materialwahl entsteht. Wird das Material sehr weich gewählt, zum Beispiel ein Moosgummi, kann das Anlegegeräusch ganz oder zumindest fast ganz unterdrückt werden.

Selbstverständlich kann der Fachmann die in den einzelnen Ausführungsvarianten dargestellten Form miteinander kombinieren, beispielsweise derart, dass die Geräuschdämpfungsleisten 37 der Figuren 14 bis 16 aus einem anderen Material bestehen oder die Verdickung 60 in zwei oder mehr Schenkel wie nach Figur 16 aufgeteilt ist. Auch die Wellen- oder die Bogenform und/oder die Stege 42 können den Figuren 14 bis 17 überlagert sein.

## Patentansprüche

1. Wischleiste (24) mit einem Wischleistenrücken (34), einem Umlegkeil (38) und mindestens einem Kippsteg (36), wobei zwischen dem Wischleistenrücken (34) und dem Umlegkeil (38) mindestens eine profilierte Geräuschdämpfungsleiste (37) angeordnet ist, die Umklappgeräusche mindert, **dadurch gekennzeichnet, daß** die Geräuschdämpfungsleiste (37) wellenförmig ausgebildet ist.

2. Wischleiste nach Anspruch 1, **dadurch gekennzeichnet, dass** die Profilierung mittels Stegen erfolgt, die die Geräuschdämpfungsleiste (37) mit dem Wischleistenrücken (34) und/oder dem Umlegkeil (38) verbinden.

3. Wischleiste nach Anspruch 2, **dadurch gekennzeichnet, dass** die Stege (42) senkrecht zum Kippsteg (36) angeordnet sind.

4. Wischleiste nach einem der Ansprüche 2 oder 3, **dadurch gekennzeichnet, dass** die Stege (42) beidseitig vom Kippsteg (36) angeordnet sind.

5. Wischleiste nach einem der Ansprüche 2 bis 4, **dadurch gekennzeichnet, dass** die Stege (42) profiliert, insbesondere konkav oder konvex ausgebildet sind.

6. Wischleiste nach einem der vorhergehenden Ansprüche, **dadurch gekennzeichnet, dass** die Geräuschdämpfungsleiste bogenförmig ausgebildet ist.

7. Wischleiste nach einem der vorhergehenden Ansprüche, **dadurch gekennzeichnet, dass** mehrere Geräuschdämpfungsleisten vorgesehen sind, deren Profilierung gegeneinander versetzt sind.

8. Wischleiste nach einem der vorhergehenden Ansprüche, **dadurch gekennzeichnet, dass** die Geräuschdämpfungsleiste Verdickungen aufweist.

9. Wischleiste nach einem der vorhergehenden Ansprüche, **dadurch gekennzeichnet, dass** die Geräuschdämpfungsleiste mit dem Wischleistenrücken eine Winkel ungleich 90 Grad einschließt

10. Wischleiste nach einem der vorhergehenden Ansprüche, **dadurch gekennzeichnet, dass** die Geräuschdämpfungsleiste geteilt ausgebildet ist.

11. Wischleiste nach einem der vorhergehenden Ansprüche, **dadurch gekennzeichnet, dass** die Geräuschdämpfungsleiste aus einem anderen Material insbesondere aus einem weicheren Material als das des Umlegkeils besteht.

12. Wischblatt mit einer Wischleiste nach einem der vorhergehenden Ansprüche.

## Claims

1. Wiping strip (24) with a wiping strip spine (34), a turn-over wedge (38) and at least one tilting web (36), wherein at least one profiled noise-damping strip (37) which reduces folding-over noises is arranged between the wiping strip spine (34) and the turn-over wedge (38), **characterized in that** the noise-damping strip (37) is of wavy design.

2. Wiping strip according to Claim 1, **characterized in that** the profiling takes place by means of webs which connect the noise-damping strip (37) to the wiping strip spine (34) and/or to the turn-over wedge (38).

3. Wiping strip according to Claim 2, **characterized in that** the webs (42) are arranged perpendicularly to the tilting web (36).

4. Wiping strip according to either of Claims 2 and 3, **characterized in that** the webs (42) are arranged on both sides of the tilting web (36).

5. Wiping strip according to one of Claims 2 to 4, **characterized in that** the webs (42) are of profiled design, in particular of concave or convex design.

6. Wiping strip according to one of the preceding claims, **characterized in that** the noise-damping strip is of curved design.

7. Wiping strip according to one of the preceding claims, **characterized in that** there is a plurality of noise-damping strips, the profilings of which are offset in relation to one another.

8. Wiping strip according to one of the preceding claims, **characterized in that** the noise-damping strip has thickened portions.

9. Wiping strip according to one of the preceding claims, **characterized in that** the noise-damping strip encloses an angle not equal to 90 degrees with the wiping strip spine.

10. Wiping strip according to one of the preceding claims, **characterized in that** the noise-damping strip is of divided design.

11. Wiping strip according to one of the preceding claims, **characterized in that** the noise-damping strip is composed of a different material, in particular of a softer material, than the material of the turn-over wedge.

12. Wiper blade with a wiping strip according to one of the preceding claims.

## Revendications

1. Réglette d'essuie-glace (24) avec un dos de réglette d'essuie-glace (34), une clavette de bordure (38) et au moins une nervure de basculement (36), au moins une réglette d'amortissement des bruits profilée (37) étant disposée entre le dos de la réglette d'essuie-glace (34) et la clavette de bordure (38), laquelle réduit les bruits de rabattement, **caractérisée en ce que** la réglette d'amortissement des bruits (37) est réalisée sous forme ondulée.

2. Réglette d'essuie-glace selon la revendication 1, **caractérisée en ce que** le profilage a lieu au moyen de nervures qui relient la réglette d'amortissement des bruits (37) au dos de la réglette d'essuie-glace (34) et/ou à la clavette de bordure (38).

3. Réglette d'essuie-glace selon la revendication 2, **caractérisée en ce que** les nervures (42) sont disposées perpendiculairement à la nervure de basculement (36).

4. Réglette d'essuie-glace selon l'une quelconque des revendications 2 ou 3, **caractérisée en ce que** les nervures (42) sont disposées des deux côtés de la nervure de basculement (36).

5. Réglette d'essuie-glace selon l'une quelconque des revendications 2 à 4, **caractérisée en ce que** les nervures (42) sont profilées, notamment sont réalisées sous forme concave ou convexe.

6. Réglette d'essuie-glace selon l'une quelconque des revendications précédentes, **caractérisée en ce que** la réglette d'amortissement des bruits est réalisée sous forme arquée.

7. Réglette d'essuie-glace selon l'une quelconque des revendications précédentes, **caractérisée en ce que** plusieurs réglettes d'amortissement des bruits sont prévues, dont les profilages sont décalés les uns par rapport aux autres.

8. Réglette d'essuie-glace selon l'une quelconque des revendications précédentes, **caractérisée en ce que** la réglette d'amortissement des bruits présente des épaississements.

9. Réglette d'essuie-glace selon l'une quelconque des revendications précédentes, **caractérisée en ce que** la réglette d'amortissement des bruits forme avec le dos de la réglette d'essuie-glace un angle différent de 90 degrés.

10. Réglette d'essuie-glace selon l'une quelconque des revendications précédentes, **caractérisée en ce que** la réglette d'amortissement des bruits est réalisée sous forme divisée.

11. Réglette d'essuie-glace selon l'une quelconque des revendications précédentes, **caractérisée en ce que** la réglette d'amortissement des bruits se compose d'un matériau différent, en particulier d'un matériau plus tendre que celui de la clavette de bordure.

12. Balai d'essuie-glace comprenant une réglette d'essuie-glace selon l'une quelconque des revendications précédentes.
